# FASCICULE DE BREVET EUROPEEN

(11) **EP 3 276 253 B1**
(45) Date de publication et mention de la délivrance du brevet: **07.08.2019**
(21) Numéro de dépôt: 17183217.3
(22) Date de dépôt: 26.07.2017
(51) Int. Cl.: F21S 41/675, F21Y 115/10

(54) **MODULE D'ÉCLAIRAGE DE PROJECTEUR DE VÉHICULE AUTOMOBILE À FAISCEAU D'OUVERTURE VARIABLE**
BELEUCHTUNGSMODUL EINES KRAFTFAHRZEUGSCHEINWERFERS MIT VARIABLEM ÖFFNUNGSSTRAHL
LIGHTING MODULE OF A MOTOR VEHICLE HEADLIGHT WITH VARIABLE-OPENING BEAM

(30) Priorité: 29.07.2016 FR 1657436
(43) Date de publication de la demande: 31.01.2018
(73) Titulaire: Valeo Vision, 93012 Bobigny Cedex (FR)
(72) Inventeur: ALBOU, Pierre, 93012 BOBIGNY Cedex (FR); MOREL, Xavier, 93012 BOBIGNY Cedex (FR); EL IDRISSI, Hafid, 93012 BOBIGNY CEDEX (FR); SOMMERSCHUH, Stephan, 93012 BOBIGNY Cedex (FR)

(56) Documents cités:
- EP-A1- 1 260 758
- EP-A1- 2 690 352
- EP-A1- 3 032 167
- EP-A2- 2 990 264
- US-A1- 2015 285 458
- US-A1- 2015 345 729

## Description

La présente invention concerne un module d'éclairage de projecteur de véhicule automobile, du type comprenant : au moins une première source lumineuse apte à émettre un rayonnement lumineux ; au moins un dispositif de traitement apte à générer un flux lumineux à partir dudit rayonnement lumineux ; et un système optique d'imagerie apte à projeter un faisceau de sortie à partir dudit flux lumineux.

Il est connu de prévoir, à l'avant d'un véhicule automobile, des projecteurs aptes à former des faisceaux lumineux pour remplir différentes fonctions d'éclairage, par exemple de type « feux de route » ou « feux de croisement ».

Des dispositifs de feux, dits adaptatifs, permettent d'ajuster l'intensité, les dimensions et/ou la direction des faisceaux selon les conditions de circulation, afin de remplir ces différentes fonctions.

Chaque projecteur comporte en général plusieurs modules d'éclairage qui permettent de former un faisceau lumineux du projecteur. Les modules peuvent être allumés ou éteints indépendamment les uns des autres pour faire varier en temps réel les caractéristiques du faisceau.

On entend par module d'éclairage un ensemble contenant au moins une source lumineuse et un système optique de projection ou de réflexion, tel que décrits dans le document EP2690352.

Le document US2015/0285458 décrit un projecteur de véhicule apte à former des faisceaux lumineux pour remplir différentes fonctions d'éclairage utilisant une matrice de micro-miroirs orientables.

Selon les fonctions d'éclairages mises en oeuvre par les modules d'éclairage, l'intensité lumineuse requise est plus ou moins forte. Par exemple, pour un véhicule circulant rapidement sur une route sensiblement droite et dégagée, il est avantageux de prévoir un éclairage intense, pour illuminer la route sur une distance élevée.

Il existe des modules d'éclairage comprenant plusieurs sources lumineuses pouvant se combiner pour former un faisceau de sortie plus intense. Une telle multiplicité des sources lumineuses augmente toutefois le coût du module.

La présente invention a pour but de faire varier l'intensité du faisceau de sortie sans multiplier les sources lumineuses d'un même module.

A cet effet, l'invention a pour objet un module d'éclairage du type précité, comprenant des moyens de commande d'une ouverture angulaire du faisceau de sortie, ladite ouverture angulaire étant choisie parmi une première et une seconde ouvertures, ladite première ouverture correspondant à un angle plus large que ladite seconde ouverture, de sorte que, pour une même intensité du rayonnement lumineux de la première source lumineuse, le faisceau de sortie correspondant à la seconde ouverture présente une intensité lumineuse plus élevée que le faisceau de sortie correspondant à la première ouverture. Le module d'éclairage comprend en outre des moyens de modification dans le temps d'une intensité lumineuse d'au moins une partie du faisceau de sortie, indépendamment de l'ouverture angulaire dudit faisceau de sortie. L'au moins un dispositif de traitement comprend une matrice de micro-miroirs étant apte à générer un flux lumineux en direction du système optique d'imagerie.

Par « ouverture angulaire du faisceau de sortie », on entend la largeur du faisceau projeté sur la route.

Suivant d'autres aspects avantageux de l'invention, le module d'éclairage comporte l'une ou plusieurs des caractéristiques suivantes, prises isolément ou suivant toutes les combinaisons techniquement possibles :
- ledit système optique d'imagerie comprenant un objectif à focale variable, les moyens de commande d'une ouverture angulaire du faisceau de sortie comprenant des moyens de commande de la distance focale dudit objectif à focale variable ; et
- le module d'éclairage comprend au moins une deuxième source lumineuse, apte à générer un faisceau secondaire adjacent au faisceau de sortie.

L'invention se rapporte en outre à un projecteur de véhicule automobile, comprenant un module d'éclairage tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une représentation schématique d'un module d'éclairage selon un premier mode de réalisation de l'invention ;
- la figure 2 est une représentation schématique d'un module d'éclairage selon un deuxième mode de réalisation de l'invention ;
- la figure 3 est une représentation schématique d'un faisceau projeté par un module d'éclairage selon un mode de réalisation de l'invention, dans une première configuration ;
- la figure 4 est une représentation schématique d'un faisceau projeté par le même module d'éclairage dans une seconde configuration ; et
- la figure 5 est une représentation schématique d'un véhicule automobile comprenant un projecteur selon un mode de réalisation de l'invention.

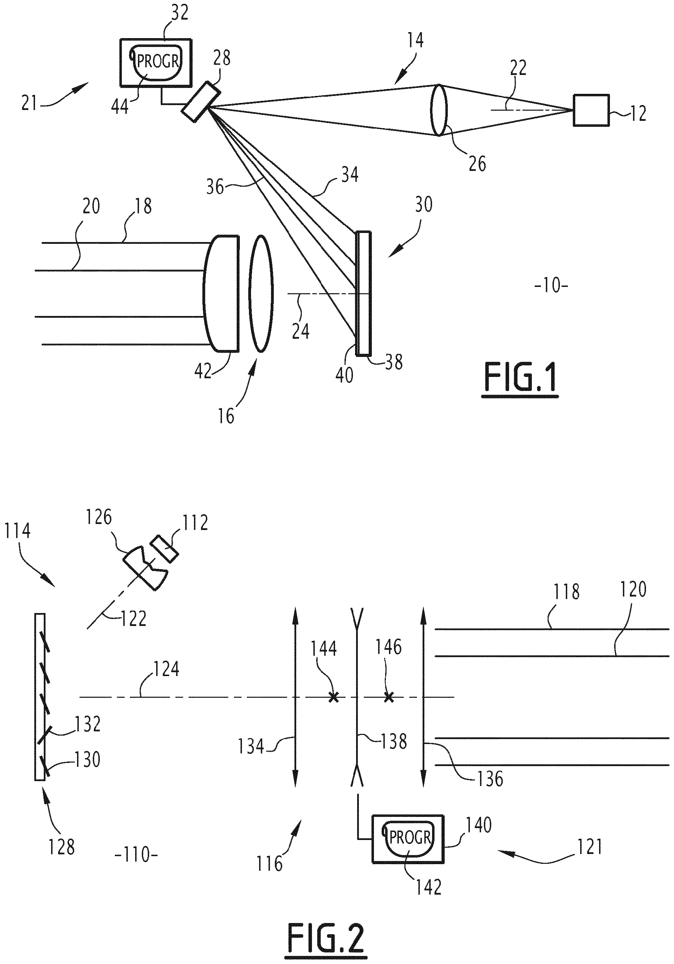

Les figures 1 et 2 représentent des modules d'éclairage 10, 110, respectivement selon un premier et un deuxième modes de réalisation de l'invention. Les modules d'éclairage 10, 110 sont destinés à équiper un projecteur de véhicule automobile.

Chacun des modules d'éclairage 10, 110 comprend: une première source lumineuse 12, 112 apte à émettre un rayonnement lumineux ; un dispositif de traitement 14, 114, apte à générer un flux lumineux à partir dudit rayonnement lumineux; et un système optique d'imagerie 16, 116 apte à projeter un faisceau de sortie 18, 118, 20, 120 à partir dudit flux lumineux.

Chacun des modules d'éclairage 10, 110 comprend en outre des moyens 21, 121 de commande d'une ouverture angulaire dudit faisceau de sortie. Lesdits moyens de commande 21, 121 permettent de choisir ladite ouverture angulaire parmi une première 18, 118 et une seconde 20, 120 ouvertures, ladite première ouverture correspondant à un angle plus large que ladite seconde ouverture. Les moyens de commande 21, 121 de l'ouverture angulaire seront décrits en détail ci-dessous.

La première source lumineuse 12, 112 est disposée selon un premier axe d'émission 22, 122. La première source lumineuse 12, 112 est préférentiellement une source lumineuse à semi-conducteurs, plus préférentiellement une diode laser.

La diode laser 12 du module d'éclairage 10 émet par exemple un rayonnement visible dont la longueur d'onde est comprise entre 400 nm et 500 nm, de préférence comprise entre 440 nm et 470 nm, soit de type « laser bleu ».

De manière alternative, la première source lumineuse 112 du module d'éclairage 110 est une diode électro-luminescente.

Le dispositif de traitement 14, 114 est apte à générer un flux lumineux selon un deuxième axe d'émission 24, 124, distinct du premier axe d'émission 22, 122. Dans le mode de réalisation de la figure 1, les premier 22 et deuxième 24 axes sont sensiblement parallèles, mais peuvent en variante être inclinés l'un par rapport à l'autre. Dans le mode de réalisation de la figure 2, les premier 122 et deuxième 124 axes sont inclinés l'un par rapport à l'autre.

Le module d'éclairage 10 de la figure 1 va être plus spécifiquement décrit.

Le dispositif de traitement 14 comporte notamment une lentille 26, un réflecteur 28 et un dispositif 30 de conversion de longueur d'onde. Le dispositif de traitement 14 comporte en outre un dispositif électronique 32 de contrôle du réflecteur 28.

La lentille 26 est apte à concentrer le rayonnement émis par la diode laser 12, en direction du réflecteur 28.

Le réflecteur 28 est apte à envoyer vers le dispositif de conversion 30 un rayon lumineux 34, 36 émis par la diode laser 12 et concentré par la lentille 26. Le réflecteur 28 est mobile selon une ou deux directions, de sorte à former un système de balayage. Le réflecteur 28 est par exemple formé de plusieurs miroirs mobiles de manière indépendante. Le déplacement des miroirs du réflecteur est notamment contrôlé par le dispositif électronique 32, comme décrit en détail ci-après.

Le dispositif 30 de conversion de longueur d'onde est par exemple formé d'une plaque 38 d'un substrat réfléchissant pour le rayonnement laser, sur lequel est déposée une couche continue et homogène 40 de luminophore. La plaque 38, par exemple réalisée en aluminium, est disposée dans un plan sensiblement perpendiculaire au deuxième axe d'émission 24.

Un dispositif analogue au dispositif de traitement 14 est notamment décrit dans le document EP2690352.

Le système optique d'imagerie 16 comprend par exemple une ou plusieurs lentilles 42. Le système optique d'imagerie 16 a un plan focal proche d'un plan de la plaque 38, de sorte à projeter un faisceau de sortie 18, 20 correspondant à un flux lumineux émis par le dispositif de conversion 30.

Les moyens 21 de commande d'une ouverture angulaire dudit faisceau de sortie comprennent un programme 44, mémorisé dans le dispositif électronique 32 de contrôle du réflecteur 28.

Le programme 44 commande une ouverture du balayage angulaire du réflecteur 28, ladite ouverture du balayage angulaire étant choisie parmi une première 34 et une seconde 36 ouvertures. La première ouverture 34 correspond à un angle plus large que la seconde ouverture 36.

Par exemple, le dispositif électronique 32 permet la mise en place de boucles d'asservissement pour avoir un champ électrique constant à proximité du réflecteur 28. Les miroirs de ce type de dispositifs sont en effet très sensibles aux perturbations extérieures telles que la température.

A réception d'une commande, le programme 44 est apte à choisir entre deux boucles d'asservissement, chacune desdites boucles correspondant à une ouverture 34 ou 36. En pratique, un changement de boucle correspond par exemple à un changement de tension ou d'intensité électrique.

De manière connue, chaque point de la couche 40 du dispositif de conversion 30, recevant le rayonnement laser « bleu » monochromatique et cohérent envoyé par le réflecteur 28, réémet une lumière considérée comme « blanche », c'est-à-dire comportant une pluralité de longueurs d'onde comprise entre 400 nm et 800 nm environ. Une image lumineuse est ainsi formée sur la couche 40, la surface occupée par ladite image dépendant de l'ouverture 34, 36 du balayage angulaire du réflecteur 28.

Pour une même quantité de lumière émise par la diode laser 12, l'intensité de ladite image lumineuse est inversement dépendante de la surface balayée. En d'autres termes, la première ouverture 34 la plus large correspond à une image lumineuse moins intense que la seconde ouverture 36 la plus étroite.

Le système optique d'imagerie 16 forme un faisceau de sortie 18, 20 correspondant à une projection à l'infini, selon le deuxième axe 24, de l'image lumineuse formée sur la couche 40 de luminophore du dispositif de conversion 30. Les première 18 et seconde 20 ouvertures du faisceau de sortie correspondent respectivement aux première 34 et seconde 36 ouvertures du balayage angulaire du réflecteur 28.

Ainsi, pour le module d'éclairage 10 de la figure 1, le faisceau de sortie correspondant à la seconde ouverture 20 présente une intensité lumineuse plus élevée que le faisceau de sortie correspondant à la première ouverture 18.

Le module d'éclairage 110 de la figure 2 va être plus spécifiquement décrit.

Le dispositif de traitement 114 comporte notamment un collimateur 126 et une matrice 128 de micro-miroirs.

Le collimateur 126 est apte à envoyer vers la matrice 128 le rayonnement émis par la diode laser 112, sous forme de rayons convergents.

La matrice 128 est sensiblement disposée dans un plan perpendiculaire au deuxième axe d'émission 124. La matrice 128 est formée de micro-miroirs 130, 132, orientables indépendamment les uns des autres, l'orientation de chaque micro-miroir étant contrôlée dans le temps par un dispositif électronique (non représenté). Chacun des micro-miroirs 130, 132 est par exemple apte à pivoter selon un axe compris dans le plan de la matrice 128. Une telle matrice de micro-miroirs, connue sous le nom de dispositif DMD *(digital micro-mirror device)* est notamment décrite dans le document US2015/0160454.

Au moins certains 130 des micro-miroirs de la matrice 128 sont orientés de sorte à renvoyer la lumière de la source lumineuse 112 vers le système optique d'imagerie 116.

Ledit système optique d'imagerie 116 est apte à projeter un faisceau de sortie 118, 120 selon le deuxième axe d'émission 124, à partir d'un flux lumineux émis par la matrice 128.

Plus précisément, le système optique d'imagerie 116 est un système à focale variable, comprenant par exemple deux lentilles convergentes 134, 136, disposées de part et d'autre d'une lentille divergente 138 le long du deuxième axe 124. La lentille divergente 138 est mobile le long dudit deuxième axe 124 entre les deux lentilles convergentes 134, 136. Le système optique d'imagerie 116 comporte également un dispositif électronique 140 pour le contrôle d'un déplacement de la lentille divergente 138.

Les moyens 121 de commande d'une ouverture angulaire dudit faisceau de sortie comprennent un programme 142, mémorisé dans ledit dispositif électronique 140. Le programme 142 commande une position de la lentille divergente 138 sur le deuxième axe 124, entre les deux lentilles convergentes 134, 136. Une première position 144 et une seconde position 146 correspondent respectivement à la première 118 et à la seconde 120 ouvertures angulaires du faisceau de sortie.

Pour une même quantité de lumière émise par la diode laser 112, l'intensité du faisceau correspondant à la première ouverture 118 la plus large est plus faible que l'intensité du faisceau correspondant à la seconde ouverture 120 la plus étroite.

Les moyens 21, 121 de commande d'une ouverture angulaire du faisceau de sortie permettent donc de modifier une intensité lumineuse dudit faisceau de sortie.

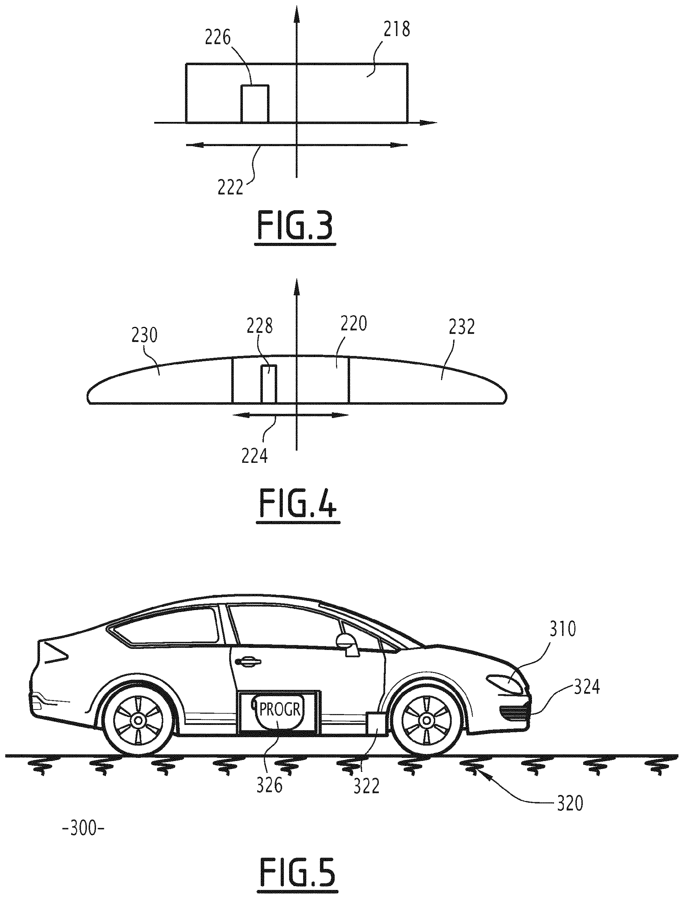

A titre d'illustration, les figures 3 et 4 représentent schématiquement des projections d'un premier 218 et d'un second 220 faisceaux, correspondant respectivement à la première 18, 118 et à la seconde 20, 120 ouverture du module d'éclairage 10, 110 décrit ci-dessus.

Le premier faisceau 218 a un étalement horizontal 222 de ±15° ; le second faisceau 220 a un étalement horizontal 224 de ±6°. L'intensité du second faisceau 220 est supérieure à celle du premier faisceau 218.

De manière préférentielle, le module d'éclairage 10, 110 comprend en outre des moyens de modification dans le temps d'une intensité lumineuse d'au moins une partie 226, 228 du faisceau de sortie, indépendamment de l'ouverture angulaire dudit faisceau de sortie. Plus précisément, il est possible de créer une zone sombre 226, 228 localisée précisément dans le faisceau de sortie 218, 220. Le module d'éclairage peut ainsi mettre en oeuvre une fonction anti-éblouissement.

Dans le mode de réalisation de la figure 1, le dispositif électronique 32 du réflecteur 28 est également relié à la diode laser 12. Dans le cas où la zone sombre est requise par le programme 44, ce dernier associe une certaine position dudit réflecteur 28 à l'extinction de ladite diode. Ainsi, certains points de la couche 40 du dispositif de conversion 30 ne reçoivent pas de rayonnement laser. Le faisceau de sortie 218, 220 qui en résulte comporte une zone sombre 226, 228 localisée à un endroit précis dudit faisceau.

Dans le mode de réalisation de la figure 2, certains micro-miroirs 132 sont orientés de sorte à ne pas renvoyer la lumière de la source lumineuse 112 vers le système optique d'imagerie 116. Ainsi, l'image 218, 220 résultant de la matrice 128 par le système optique d'imagerie 116 comporte une zone sombre 226, 228 précisément localisée.

De manière préférentielle, le module 10, 110 de la figure 1 ou 2 comporte en outre au moins une deuxième source lumineuse (non représentée), plus préférentiellement une deuxième et une troisième source lumineuses. En référence à la figure 4, lorsque le faisceau de sortie 220 est configuré dans son étalement 224 le plus faible, lesdites deuxième et troisième sources lumineuses sont aptes à générer des faisceaux secondaires 230, 232, situés de part et d'autre du faisceau de sortie 220. Ces faisceaux secondaires permettent, en cas de besoin, de complémenter la largeur du faisceau principal 220.

Selon un autre mode de réalisation, le projecteur équipé du module 10, 110 comporte des modules secondaires aptes à générer les faisceaux secondaires 230, 232.

Des faisceaux secondaires 230, 232 de type « sails », tels que décrits dans le document EP2672170, peuvent notamment être utilisés.

La figure 5 représente schématiquement un véhicule automobile 300, équipé d'au moins un projecteur 310, ledit projecteur comprenant un module d'éclairage 10 ou 110 correspondant au mode de réalisation de l'une des figures 1 ou 2.

De préférence, le véhicule automobile 300 comprend deux projecteurs 310 sensiblement identiques, situés à l'avant dudit véhicule.

Le véhicule automobile 300 comprend en outre un dispositif 320 de mise en oeuvre d'un procédé de fonctionnement des projecteurs 310.

Ledit dispositif 320 comprend un ou des détecteurs 322, 324 d'au moins un paramètre relatif à un déplacement et/ou à un environnement du véhicule 300. Par exemple, le dispositif 320 comprend un premier détecteur 322 de la vitesse dudit véhicule 300 et un deuxième détecteur 324 d'obstacles face audit véhicule 300.

Le dispositif 320 comprend en outre un programme 326 de mise en oeuvre d'un procédé de fonctionnement des projecteurs 310, décrit ci-après.

On considère que par défaut, les projecteurs 310 sont configurés de sorte que le faisceau de sortie des modules 10, 110 soit dans sa première configuration 218 la plus large, donc la moins intense.

Le premier détecteur 322 mesure la vitesse du véhicule 300 et le deuxième détecteur 324 estime une quantité d'autres véhicules venant en face dudit véhicule 300. Au-delà d'un certain seuil de vitesse, par exemple 110 Km/h, et si la route est suffisamment dégagée en face, le programme 326 commande le basculement du faisceau de sortie des modules 10, 110 soit dans sa seconde configuration 220 la plus étroite, donc la plus intense. Le conducteur du véhicule 300 a ainsi une meilleure vision de la route sur laquelle circule ledit véhicule.

Un tel procédé permet de concentrer la lumière émise par la première source lumineuse 12, 112 du module d'éclairage 10, 110 lorsque les circonstances ne rendent pas nécessaire un étalement de cette lumière par le faisceau de sortie. Un éclairage plus intense est ainsi obtenu à partir de la même source lumineuse 12, 112.

Selon d'autres paramètres, le programme 326 active également l'allumage des faisceaux secondaires 230, 232, et/ou la création de la zone sombre 226, 228 pour éviter d'éblouir des conducteurs arrivant en face.

## Revendications

1. Module d'éclairage (10, 110) de projecteur de véhicule automobile, comprenant :
- au moins une première source lumineuse (12, 112) apte à émettre un rayonnement lumineux ;
- au moins un dispositif de traitement (14, 114), apte à générer un flux lumineux à partir dudit rayonnement lumineux ; et
- un système optique d'imagerie (16, 116) apte à projeter un faisceau de sortie (218, 220) à partir dudit flux lumineux ;
le module d'éclairage comprenant des moyens (21, 121) de commande d'une ouverture angulaire dudit faisceau de sortie, ladite ouverture angulaire étant choisie parmi une première (18, 118) et une seconde (20, 120) ouvertures, ladite première ouverture correspondant à un angle plus large que ladite seconde ouverture,
de sorte que, pour une même intensité du rayonnement lumineux de la première source lumineuse, le faisceau de sortie correspondant à la seconde ouverture présente une intensité lumineuse plus élevée que le faisceau de sortie correspondant à la première ouverture,
le module d'éclairage comprenant en outre des moyens (44, 128) de modification dans le temps d'une intensité lumineuse d'au moins une partie (226, 228) du faisceau de sortie, indépendamment de l'ouverture angulaire dudit faisceau de sortie,
et dans lequel l'au moins un dispositif de traitement (114) comprend une matrice (128) de micro-miroirs (130, 132) orientables indépendamment les uns des autres, ladite matrice de micro-miroirs étant apte à générer un flux lumineux en direction du système optique d'imagerie.

2. Module d'éclairage selon la revendication précédente, **caractérisé en ce que** ledit système optique d'imagerie (116) comprend un objectif à focale variable (134, 136, 138),
les moyens (121) de commande d'une ouverture angulaire du faisceau de sortie comprenant des moyens (140, 142) de commande d'une distance focale dudit objectif à focale variable.

3. Module d'éclairage selon l'une des revendications précédente, comprenant au moins une deuxième source lumineuse, apte à générer un faisceau secondaire (230, 232) adjacent au faisceau de sortie (220).

4. Projecteur (310) de véhicule automobile, comprenant un module d'éclairage (10, 110) selon l'une des revendications précédentes.

## Patentansprüche

1. Beleuchtungsmodul (10, 110) eines Kraftfahrzeugscheinwerfers, welches umfasst:
- wenigstens eine erste Lichtquelle (12, 112), die in der Lage ist, eine Lichtstrahlung auszusenden;
- wenigstens eine Verarbeitungsvorrichtung (14, 114), die in der Lage ist, aus der Lichtstrahlung einen Lichtstrom zu erzeugen; und
- ein optisches Bildgebungssystem (16, 116), das in der Lage ist, aus dem Lichtstrom einen Ausgangsstrahl (218, 220) zu projizieren;
wobei das Beleuchtungsmodul Mittel (21, 121) zur Steuerung eines Öffnungswinkels des Ausgangsstrahls umfasst, wobei der Öffnungswinkel aus einem ersten (18 118) und einem zweiten (20, 120) Öffnungswinkel gewählt ist, wobei der erste Öffnungswinkel einem größeren Winkel als der zweite Öffnungswinkel entspricht,
derart, dass für dieselbe Intensität der Lichtstrahlung der ersten Lichtquelle der Ausgangsstrahl, der dem zweiten Öffnungswinkel entspricht, eine höhere Lichtstärke als der Ausgangsstrahl aufweist, der dem ersten Öffnungswinkel entspricht,
wobei das Beleuchtungsmodul außerdem Mittel (44, 128) zur zeitlichen Änderung einer Lichtstärke wenigstens eines Teils (226, 228) des Ausgangsstrahls unabhängig vom Öffnungswinkel des Ausgangsstrahls umfasst,
und wobei die wenigstens eine Verarbeitungsvorrichtung (114) eine Matrix (128) von Mikrospiegeln (130, 132) umfasst, die unabhängig voneinander ausrichtbar sind, wobei die Matrix von Mikrospiegeln in der Lage ist, einen Lichtstrom in Richtung des optischen Bildgebungssystems zu erzeugen.

2. Beleuchtungsmodul nach dem vorhergehenden Anspruch, **dadurch gekennzeichnet, dass** das optische Bildgebungssystem (116) ein Objektiv mit variabler Brennweite (134, 136, 138) umfasst,
wobei die Mittel (121) zur Steuerung eines Öffnungswinkels des Ausgangsstrahls Mittel (140, 142) zur Steuerung einer Brennweite des Objektivs mit variabler Brennweite umfassen.

3. Beleuchtungsmodul nach einem der vorhergehenden Ansprüche, welches wenigstens eine zweite Lichtquelle umfasst, die in der Lage ist, einen sekundären Strahl (230, 232) zu erzeugen, der dem Ausgangsstrahl (220) benachbart ist.

4. Kraftfahrzeugscheinwerfer (310), welcher ein Beleuchtungsmodul (10, 110) nach einem der vorhergehenden Ansprüche umfasst.

## Claims

1. Lighting module (10, 110) for a motor vehicle headlamp, said module comprising:
- at least one first light source (12, 112) able to emit light radiation;
- at least one processing device (14, 114) able to generate a light flux from said light radiation; and
- an imaging optical system (16, 116) able to project an exit beam (218, 220) from said light flux;
the lighting module comprising means (21, 121) for controlling an angular aperture of said exit beam, said angular aperture being chosen from a first aperture (18, 118) and a second aperture (20, 120), said first aperture corresponding to a wider angle than said second aperture,
so that, for a given intensity of the light radiation of the first light source, the exit beam corresponding to the second aperture has a higher light intensity than the exit beam corresponding to the first aperture,
the lighting module furthermore comprising means (44, 128) for modifying over time a light intensity of at least one portion (226, 228) of the exit beam, independently of the angular aperture of said exit beam,
and wherein the at least one processing device (114) comprises a matrix array (128) of micro-mirrors (130, 132) that are orientable independently of one another, said matrix array of micro-mirrors being able to generate a light flux in the direction of the imaging optical system.

2. Lighting module according to the preceding claim, **characterized in that** said imaging optical system (116) comprises a variable focal length objective (134, 136, 138),
the means (121) for controlling an angular aperture of the exit beam comprising means (140, 142) for controlling a focal length of said variable focal length objective.

3. Lighting module according to either of the preceding claims, comprising at least one second light source, able to generate a secondary beam (230, 232) adjacent to the exit beam (220).

4. Motor vehicle headlamp (310), comprising a lighting module (10, 110) according to one of the preceding claims.
